# FASCICULE DE BREVET EUROPEEN

(11) **EP 2 095 150 B1**
(45) Date de publication et mention de la délivrance du brevet: **20.11.2013**
(21) Numéro de dépôt: 07871844.2
(22) Date de dépôt: 12.12.2007
(51) Int. Cl.: G01S 19/24, G01S 19/30, G01S 19/37

(54) **PROCÉDÉ ET DISPOSITIF DE RÉCEPTION D'UN SIGNAL DE RADIONAVIGATION À MODULATION BOC**
VERFAHREN UND VORRICHTUNG ZUM EMPFANGEN EINES BOC-MODULIERTEN FUNKNAVIGATIONSSIGNALS
METHOD AND DEVICE FOR RECEIVING A BOC MODULATION RADIO-NAVIGATION SIGNAL

(30) Priorité: 28.12.2006 FR 0611486
(43) Date de publication de la demande: 02.09.2009
(73) Titulaire: Centre National d'Etudes Spatiales (C.N.E.S.), 75039 Paris Cedex 01 (FR)
(72) Inventeur: RICHARD DE LA TOUR, Antoine, F-31500 Toulouse (FR)
(74) Mandataire: Cabinet BARRE LAFORGUE & associés
(86) Numéro de dépôt international: PCT/FR2007/002051
(87) Numéro de publication internationale: WO 2008/090276

(56) Documents cités:
- EP-A- 1 315 308
- FR-A- 2 848 743
- FR-A- 2 853 967
- US-A1- 2005 281 325

## Description

L'invention concerne un procédé et un dispositif de réception de signaux de radionavigation modulés émis par des satellites d'un système de navigation destinés à permettre une détermination autonome de la position du dispositif de réception dans un repère propre à ce système.

Les principaux systèmes de radionavigation actuellement disponibles sont le système américain GPS (« Global Positioning System »), le système russe GLONASS (« Global Orbitography Navigation Satellites System ») et le nouveau système européen GALILEO constitué de trente satellites en orbite moyenne.

Le positionnement d'un terminal de réception, dit dans tout le texte récepteur, dans un tel système est fondé sur la connaissance des distances, dites pseudo-distances, entre ce récepteur et plusieurs satellites de ce système (au moins trois pour un positionnement en trois dimensions, en pratique quatre pour lever l'incertitude sur le décalage d'horloge entre le système et le récepteur). Chaque pseudo-distance est dérivée de la position du satellite et de la mesure du temps de propagation d'un signal entre le satellite équipé d'une horloge propre et le récepteur.

Pour chaque système, les positions des satellites sont déterminées à partir d'un réseau de stations sol indépendant des récepteurs. Ces positions sont transmises aux récepteurs par les satellites eux-mêmes. Dès lors, chaque récepteur peut évaluer le retard de tels signaux reçus par rapport aux horloges des satellites, qui sont toutes synchrones. Chaque récepteur peut ainsi déduire de la mesure de ces retards et de la connaissance des positions des satellites, les pseudo-distances correspondantes. La précision du positionnement est donc directement liée à la précision de la mesure de ces retards.

Typiquement, ces signaux sont construits par la modulation de données binaires à faible débit régulier qui correspondent à des informations nécessaires au récepteur pour le calcul de la position (identification du satellite, référence temporelle, correction ionosphérique, almanachs ou éphémérides, etc.) par des séquences binaires pseudos-aléatoires cadencées à haute fréquence *f_{c}*. Ces signaux sont ensuite transposés dans la plage de fréquence d'émission par modulation avec une porteuse d'émission de fréquence *fₚ*.

Le récepteur peut ainsi extraire les données contenues dans le signal reçu par une première démodulation à l'aide d'une porteuse générée localement aux fins de transposer le signal en bande de base et une deuxième démodulation à l'aide de séquences pseudo-aléatoires générées localement. La mesure du retard est dérivée de la mesure du retard des séquences pseudo-aléatoire et de la mesure du retard de la porteuse.

Par ailleurs, aux fins de permettre notamment la cohabitation des systèmes GPS et GALILEO dans la bande de fréquence connue sous le nom de bande E2-L1-E1 [1559 MHz à 1591 MHz], où les seules bandes disponibles pour le système GALILEO consistent en deux bandes de 4 MHz agencées de part et d'autre de la bande L1 déjà occupée par le système GPS, il a été nécessaire de définir une modulation particulière, dite modulation à porteuse à double décalage ou BOC (« Binary Offset Carrier »), qui a la particularité de présenter un spectre composé d'au moins deux lobes principaux décalés symétriquement par rapport à la fréquence centrale de la bande L1 (1575,42 MHz).

D'autre part, le nouveau signal militaire du système GPS connu sous le nom de code-M (ou M-code) utilise des modulations BOC pour les bandes de fréquences L1 [1563 MHz à 1587 MHz] et L2 [1215 MHz à 1237 MHz].

Le système GALILEO prévoit également la transmission de signaux à modulation BOC dans la bande de fréquences E6 [1260 MHz à 1300 MHz].

La construction de tels signaux BOC utilise en plus des séquences binaires pseudo-aléatoires précédemment décrites, une sous-porteuse carrée de fréquence *fₛₚ*. Un signal BOC est typiquement noté BOC(*m*,*n*) où, *m* et *n* définissent respectivement le rapport entier entre la fréquence *fₛₚ* de la sous-porteuse de ce signal BOC et la fréquence de la séquence binaire pseudo-aléatoire d'un signal GPS émis sur la bande L1, cette fréquence valant 1,023MHz, et le rapport entier entre la fréquence *f_{c}* de la séquence binaire pseudo-aléatoire de ce signal BOC et cette fréquence de la séquence binaire pseudo-aléatoire d'un signal GPS émis sur la bande L1 valant 1,023MHz. Ces paramètres permettent notamment de comparer un signal BOC à un signal GPS émis sur la bande L1. De plus, la fréquence centrale d'un signal BOC étant la fréquence centrale de la bande L1, il est aisé de réaliser des récepteurs bi-modes GPS et GALILEO.

Il existe différents procédés et dispositifs de réception de tels signaux BOC. Typiquement, un récepteur d'un signal BOC comprend un premier module, dit dans toute la suite module radiofréquence, adapté pour permettre la numérisation du signal analogique reçu, et un deuxième module, dit dans toute la suite module numérique, adapté pour démoduler le signal numérisé en vue d'en extraire les informations transmises par le satellite et l'évaluation des différents retards.

FR 2 848 743 décrit par exemple un procédé de traitement d'un signal BOC comprenant une première étape de traitement du signal analogique consistant à effectuer une translation en fréquence des deux lobes principaux du signal l'un vers l'autre par la multiplication du signal d'entrée par un signal analogique du type cos(ω.*t*) en vue de permettre une numérisation du signal par un échantillonnage peu consommateur en énergie et une seconde étape de traitement consistant à démoduler le signal ainsi numérisé par des corrélations du signal avec une porteuse, une sous-porteuse et des codes générés localement.

Cette technique générale de démodulation d'un signal BOC présente l'inconvénient de recourir à de nombreuses intégrations, ce qui implique la consommation d'une grande quantité d'énergie. Dès lors, un récepteur mettant en oeuvre un tel procédé doit être régulièrement réalimenté en énergie, limitant ainsi son autonomie.

FR 2 853 967 décrit un procédé d'acquisition d'un signal de radionavigation du type BOC, cette acquisition étant effectuée par un récepteur comprenant une voie de corrélation de porteuse en phase et en quadrature entre le signal reçu et deux porteuses en phase et en quadrature générées localement, une voie de corrélation de sous-porteuse en phase et en quadrature entre les signaux en sortie de la voie de corrélation de porteuse et deux sous-porteuses générées localement et une voie de corrélation de code généré localement.

L'inconvénient d'un tel traitement réside toujours dans la consommation excessive d'énergie nécessaire pour assurer la démodulation du signal. En particulier, en phase de poursuite, les voies de corrélation requièrent huit intégrateurs. Or, une intégration est une opération nécessitant une grande quantité de ressources énergétiques.

L'invention vise à proposer un procédé et un dispositif de réception d'un signal de radionavigation de type BOC peu consommateurs en ressources calculatoires et énergétiques.

L'invention vise en particulier à proposer un procédé et un dispositif de réception d'un signal BOC dont la démodulation du signal consomme moins d'énergie que la démodulation du signal des procédés et dispositifs de l'art antérieur.

L'invention vise également à proposer un procédé et un dispositif de réception d'un signal BOC dont la démodulation du signal soit rapide.

L'invention vise également à proposer un procédé de réception d'un signal BOC qui puisse permettre aussi bien l'acquisition que la poursuite du signal.

L'invention vise également à proposer un procédé de réception d'un signal BOC qui puisse permettre la démodulation d'un signal à sous-porteuse faible ou élevée.

L'invention vise également à proposer un procédé et un dispositif de réception d'un signal BOC comprenant deux sous-porteuses distinctes.

Pour ce faire, l'invention concerne un procédé de réception d'un signal composite radioélectrique de navigation conforme à la revendication 1.

Un procédé selon l'invention remplace le traitement couramment utilisé par la plupart des récepteurs 2 de signaux de radionavigation à modulation BOC comprenant pour chacune des voies I et Q, une étape de corrélation du signal reçu par des codes pseudo-aléatoires générés localement avec leur sous-porteuse en phase et en quadrature, par une étape de génération de codes modifiés permettant une étape de corrélation du signal reçu par les codes modifiés préalablement à une étape de corrélation des signaux résultants par deux sous-porteuses en phase et en quadrature générés localement.

Un tel procédé permet de réduire le nombre d'intégrations nécessaires pour assurer la démodulation du signal BOC reçu. En particulier, la génération de *K* codes modifiés, où *K=*α.*fₛₚ*/*f_{c},* α étant un entier prédéterminé, permet de ramener la démodulation d'un signal BOC comprenant une porteuse, une sous-porteuse et des codes pseudo-aléatoire, à la démodulation d'un signal comprenant une porteuse et une sous-porteuse. En d'autres termes, l'étape de démodulation du code de l'art antérieur est remplacée par une étape de génération de codes modifiés couplée à une étape de démodulation de la sous-porteuse. L'étape de corrélation sur le code de l'art antérieur est ainsi éliminée, ce qui réduit le nombre d'intégrations nécessaires pour la démodulation d'un signal BOC.

Un procédé selon l'invention est donc moins consommateur en ressources énergétiques que les procédés de l'art antérieur.

Chaque code modifié présente sur une bribe de temps T*ₖ*, où T*ₖ*=1/α*.fₛₚ*, la forme du code sans sous-porteuse et est décalé temporellement du code modifié suivant d'une durée T*ₖ*. Cela signifie que la somme des K codes modifiés ainsi générés représente le code sans sous-porteuse sur une bribe de temps de durée 1/*f_{c}*.

Selon un mode de réalisation de l'invention, la corrélation du signal en bande de base par ces *K* codes modifiés et l'intégration des signaux résultants sur une période prédéterminée peuvent être réalisées par la génération d'un premier code modifié multiplié au signal en bande de base et transmis à un premier bloc d'intégration. Le premier code modifié est ensuite transmis à une bascule de durée T*ₖ* pour effectuer un décalage temporel de durée T*ₖ* de ce code de manière à générer le deuxième code modifié. Ce deuxième code modifié est multiplié au signal en bande de base et transmis à un deuxième bloc d'intégration. L'opération peut être répétée jusqu'à la génération du dernier code modifié et l'intégration du dernier signal résultant.

Selon une variante de réalisation, le générateur de code modifié peut être remplacé par un générateur de code pseudo-aléatoire associé à un module adapté pour effectuer un lien séquentiel avec *K* blocs d'intégrations.

Un procédé selon l'invention permet la réception d'un signal de radionavigation en assurant la numérisation du signal et la démodulation du signal numérisé.

Typiquement, la réception d'un signal de radionavigation comprend un premier traitement, dit traitement d'acquisition du signal, et un deuxième traitement, dit traitement de poursuite du signal.

Avantageusement et selon l'invention, un procédé selon l'invention comprend les étapes dans lesquelles,
- une estimation d'énergie est calculée à partir des signaux de sortie de voies.
- une estimation de la phase de la porteuse est calculée à partir desdits signaux de sortie de voie intégrés.

Ces deux étapes permettent d'estimer le retard du code pseudo-aléatoire basé sur une estimation d'énergie et la correction sur la phase de la porteuse au cours du traitement d'acquisition du signal.

Une fois l'estimation du retard du code et de la phase de la sous-porteuse réalisés, un procédé selon l'invention est adapté pour assurer le traitement de poursuite du signal.

Avantageusement et selon l'invention, en phase de poursuite,
- une estimation de la phase de la porteuse est calculée à partir des signaux de sortie de voies,
- une estimation de la phase de la sous-porteuse est calculée à partir des signaux de sortie de voies,
- une correction de la phase de la porteuse et du retard du code est effectuée si ladite énergie estimée diminue au cours du temps,
- une démodulation des données de navigation transmises par le signal BOC est réalisée.

Un procédé selon l'invention permet l'acquisition du signal et la poursuite du signal. Ces deux traitements sont réalisés en minimisant le recours aux ressources énergétiques, en limitant le nombre d'intégration nécessaire à la démodulation du signal.

L'estimation de l'énergie du signal peut être réalisée par tous les moyens connus.

Néanmoins, avantageusement et selon l'invention, l'estimation d'énergie est réalisée par une somme quadratique de chacun des signaux de sortie de voies.

L'estimation de la phase de la sous-porteuse peut être réalisée par tous les moyens connus.

Néanmoins, avantageusement et selon l'invention, l'estimation de la phase de la sous-porteuse est réalisée par un estimateur du type arctangente.

Un procédé selon l'invention comprend une étape de génération de *K* codes pseudo-aléatoires modifiés, où *K* = α.f*ₛₚ*/*f_{c}*.*K* traduit le découpage effectué par la sous-porteuse sur une bribe de code pseudo-aléatoire. Dès lors, la valeur de l'entier α dépend de la forme de la sous-porteuse, notamment du signe de la sous-porteuse. Un procédé selon l'invention permet le traitement de tout signal BOC, quel que soit le découpage effectué par la sous-porteuse sur une bribe de code pseudo-aléatoire.

En général, la sous-porteuse d'un signal à modulation BOC, présente deux niveaux. La valeur de l'entier α est dépendante du nombre de niveaux de la sous-porteuse. En l'occurrence, pour une sous-porteuse à deux niveaux, la valeur de l'entier α doit être un multiple de 4.

Dès lors, avantageusement et selon l'invention la valeur de l'entier a est fixé à 4.

Néanmoins, pour une sous-porteuse présentant un nombre supérieur de niveaux, la valeur de l'entier α est fixée à une valeur multiple de ce nombre de niveaux de cette sous-porteuse.

Un procédé selon l'invention permet la réception d'un signal BOC à un canal et la réception d'un signal BOC à deux canaux, notamment un canal pilote et un canal de données. Pour ce faire, un procédé selon l'invention comprend une étape de génération de codes pseudo-aléatoires modifiés pour le canal pilote, et une étape de génération de codes pseudo-aléatoires modifiés pour le canal de données. Toutes les autres étapes sont sur chaque canal, pilote et de données, similaires à celles précédemment mentionnées.

L'invention s'étend à un récepteur d'un signal composite de radionavigation comprenant au moins un signal modulé par une porteuse, une sous-porteuse carrée, et un code pseudo-aléatoire.

Pour ce faire, l'invention concerne également un récepteur conforme à la revendication 7.

Avantageusement, un récepteur selon l'invention comprend un estimateur de phase de porteuse, un estimateur de phase de sous-porteuse et un estimateur d'énergie.

Avantageusement, un récepteur selon l'invention comprend un estimateur de phase de sous-porteuse du type arctangente.

Un procédé selon l'invention est avantageusement mis en oeuvre dans et par un récepteur selon l'invention.

L'invention concerne en outre un procédé de réception d'un signal de radionavigation et un récepteur d'un signal de radionavigation, caractérisés en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique d'un récepteur d'un signal de radionavigation selon l'invention,
- la figure 2 est une vue schématique des signaux de modulation d'un signal BOC, d'un signal BOC résultant, et de codes pseudo-aléatoires modifiés générées selon l'invention,
- la figure 3 est une vue schématique d'un module radiofréquence d'un récepteur selon un mode de réalisation de l'invention adapté pour convertir un signal radioélectrique reçu en un signal numérique en bande de base,
- la figure 4 est une vue schématique d'un module numérique d'un récepteur selon un mode de réalisation de l'invention,
- la figure 5 est une vue schématique d'un module numérique d'un récepteur selon un mode de réalisation de l'invention en phase de poursuite.

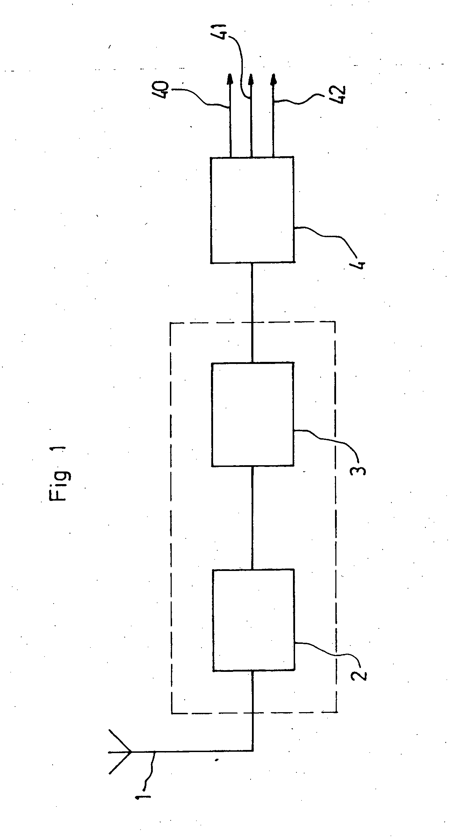

Le récepteur de la figure 1 comprend une antenne 1 adaptée pour recevoir un signal radioélectrique en provenance d'un satellite, un module 2 radiofréquence adapté pour mettre en forme le signal radioélectrique reçu pour son traitement par un module 4 numérique. Le module 2 radiofréquence réalise des fonctions connues d'amplification, de filtrage et de translation spectrale du signal reçu. Le module 2 radiofréquence est associé à un module 3 de numérisation adapté pour échantillonner le signal à la sortie du module 2 radiofréquence. Ce signal numérisé est projeté sur des voies en phase et en quadrature d'un module 4 numérique. Le module 4 numérique réalise des fonctions de désétalement du signal et des données. Ce module 4 peut également réaliser des opérations de rapprochement des lobes pour les signaux à sous-porteuse élevée. Le module 4 numérique permet de fournir à au moins trois sorties 40, 41, 42, respectivement, les données transmises par le signal reçu, une estimation de la phase de la porteuse et une estimation du retard.

Le module 4 numérique réalise par corrélation du signal d'entrée avec des signaux de référence générés localement, le désétalement du signal de donnée. Cette opération nécessite l'alignement temporel du signal de référence généré localement et l'estimation de l'erreur de phase porteuse-référence locale.

Un signal modulé selon une modulation BOC comporte une porteuse de fréquence *fₚ*, une sous-porteuse de fréquence *fₛₚ* et un code pseudo-aléatoire de fréquence *f_{c}*.

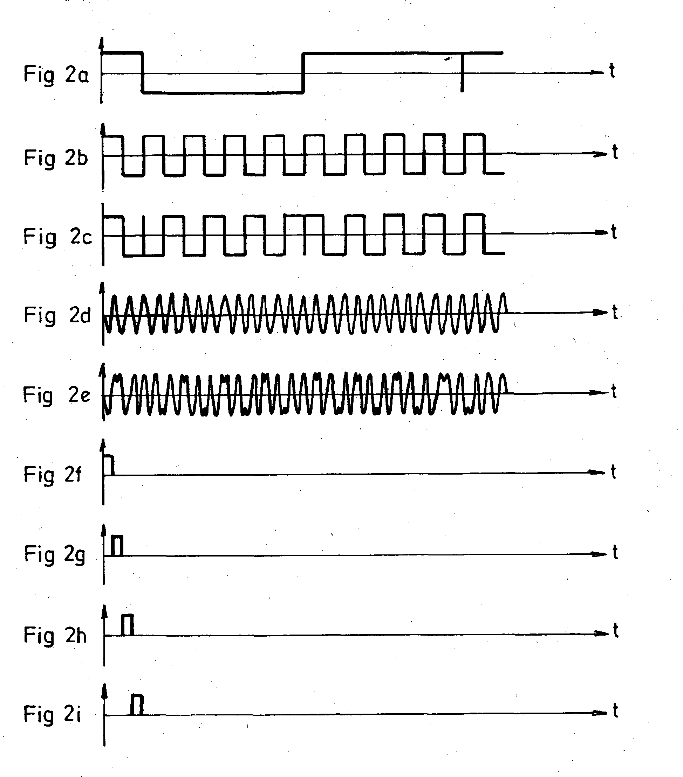

La figure 2e présente un signal de radionavigation selon une modulation BOC. Un tel signal est par exemple obtenu par un code pseudo-aléatoire tel que représenté sur la figure 2a, une sous-porteuse telle que représentée sur la figure 2b et une porteuse telle que représentée sur la figure 2d.

La figure 2c est une représentation du code pseudo-aléatoire avec sous-porteuse. Selon ce mode de réalisation, le rapport *m*/*n* vaut 1 et le nombre de codes pseudo-aléatoires modifiés vaut 4.

La réception d'un signal modulé selon une telle modulation BOC comprend des étapes de numérisation du signal reçu pour donner un signal numérique, dit signal en bande de base, et des étapes de démodulation du signal numérisé.

La numérisation du signal comporte une étape d'échantillonnage du signal à une fréquence d'échantillonnage *fₑ*. Il est connu que la fréquence d'échantillonnage, pour respecter le critère de Shanon-Nyquist qui évite le repliement du spectre, doit être supérieure ou égale à la largeur de bande du spectre du signal. Le spectre d'un signal BOC ayant une bande de fréquence large, le respect de ce critère implique une fréquence *fₑ* élevée, ce qui implique une consommation importante d'énergie pour l'échantillonnage du signal. Dès lors, selon un mode de réalisation avantageux de l'invention, la numérisation du signal est suivie d'une étape de translation des lobes du signal BOC les uns vers les autres pour réduire la bande de fréquence, ce qui permet de réduire la fréquence des traitements de corrélation et donc de réduire la consommation d'énergie.

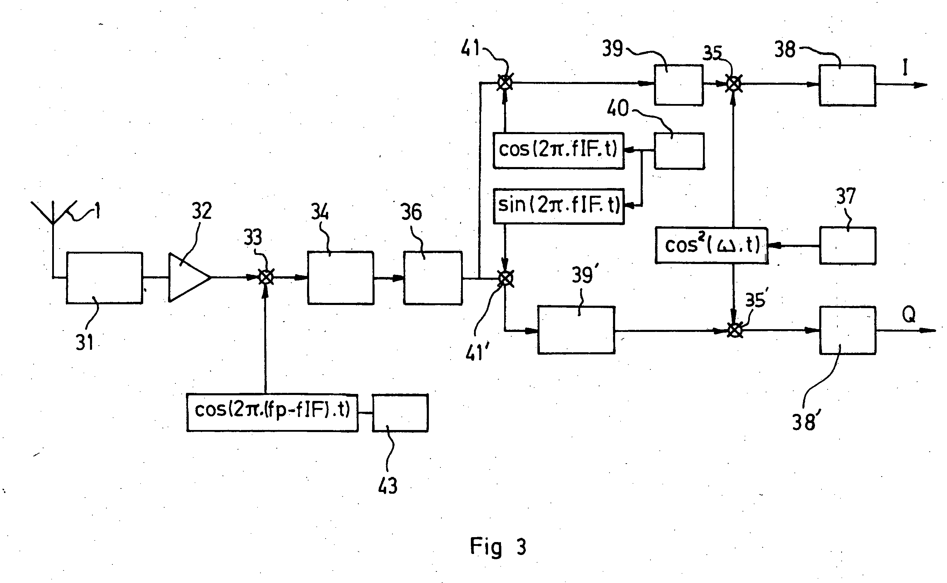

Ces étapes de numérisation du signal peuvent être réalisés par un module radiofréquence de numérisation du signal tel que représenté sur la figure 3.

En sortie d'une antenne 1 de réception, un filtrage passe-bande du signal est de préférence réalisé par un filtre 31 passe-bande de manière à éliminer le bruit ou les interférences en dehors de la bande de fréquence de réception. Ce filtre 31 passe-bande peut-être réalisé par tous moyens connus, par exemple par un filtre céramique. Le signal résultant est de préférence, tel que représenté sur la figure 3, amplifié par un amplificateur 32 faible bruit.

Selon un mode de réalisation avantageux, le signal résultant est multiplié par un oscillateur local pour redescendre à une fréquence intermédiaire *f_{IF}* avant numérisation. Pour ce faire, le signal à la sortie de l'amplificateur 32 est multiplié par un signal de la forme cos(2π.(*fₚ*-*f_{IF}*).*t*) par un oscillateur 43 local à l'aide d'un multiplicateur 33 adapté pour effectuer la multiplication du signal amplifié par ce signal généré.

De préférence, le signal résultant est filtré au moyen d'un filtre passe-bande 34 qui peut être de tout type.

Le signal résultant est ensuite numérisé par un convertisseur 36 analogique numérique.

Le signal résultant est multiplié, sur une première voie, dite voie I, par un signal de la forme cos(2π.*f_{IF}*.*t*) généré par un oscillateur 40 contrôlé numériquement à l'aide d'un multiplicateur 41 adapté pour effectuer la multiplication du signal numérisé par ce signal généré. Ce même signal est également multiplié, sur une seconde voie, dite voie Q, par un signal de la forme sin(2π.*f_{IF}*.*t*) généré par l'oscillateur 40 contrôlé numériquement à l'aide d'un multiplicateur 41' adapté pour effectuer la multiplication du signal numérisé par ce signal généré.

Sur chacune des voies I et Q, le signal résultant est filtré au moyen d'un filtre 39, 39' passe-bas ou passe bande. Ces filtres 39, 39' peuvent être de tout type.

Si la sous-porteuse est élevée, on peut de manière optionnelle utiliser un signal du type cos²(π.ω.*t*) pour réduire la fréquence des traitements.

Ainsi, selon ce mode de réalisation de l'invention, sur chaque voie, le signal résultant est multiplié par un signal de la forme cos²(π.ω.*t*), ω dépendant de la fréquence de la sous-porteuse, du rythme du code pseudo-aléatoire et de la fréquence d'échantillonnage. Ce signal est par exemple généré par un oscillateur 37 numérique. Les multiplications entre les signaux en sortie des filtres 39, 39' et le signal généré par l'oscillateur 37 numérique sont réalisées par deux multiplicateurs 35, 35' agencés respectivement sur chaque voie I et Q.

Selon ce mode de réalisation de l'invention, sur chaque voie, le signal est à nouveau filtré par un filtre passe-bande 38, 38' agencé respectivement sur chacune des voies I et Q.

Le signal est ainsi prêt à être démodulé.

Dans le cas de la réception d'un signal BOC à des fins de positionnement d'un récepteur, la démodulation du signal a pour but de permettre la mesure du retard de propagation à partir de la différence entre le temps d'émission du code par le satellite et le temps de réception du code par le récepteur.

De plus, un signal radioélectrique émis par un satellite en mouvement reçu par un récepteur est soumis à un effet doppler, inconnu du récepteur.

Dès lors, la démodulation du signal se fait par corrélation du signal BOC reçu avec une porteuse, une sous-porteuse et des codes générés au niveau du récepteur. Cette sous-porteuse et ces codes générés au niveau du récepteur sont initialisés pour présenter un retard et un effet doppler a priori inconnu.

Dans une première phase, dite phase d'acquisition, l'énergie d'une fonction d'autocorrélation entre le signal reçu et le signal généré localement est évaluée en vue de la recherche d'un maximum. Ce maximum d'énergie est caractéristique d'un déphasage minimal entre le signal reçu et le signal généré. Ce déphasage minimal indique que les valeurs de retard et d'effet doppler utilisés pour l'évaluation de l'énergie sont proches des valeurs effectives.

Ces valeurs sont ensuite affinées dans une deuxième phase, dite phase de poursuite.

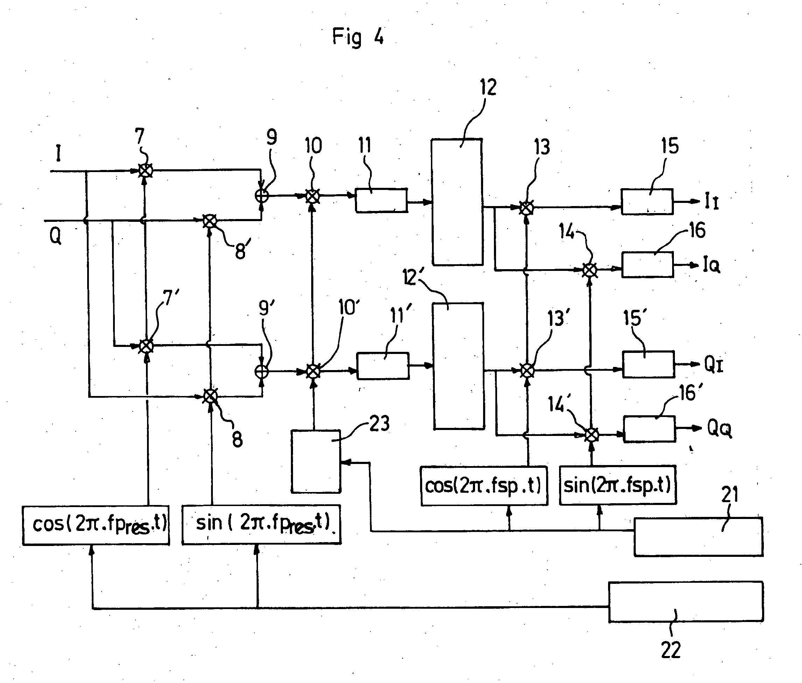

Comme représenté sur la figure 4, le signal numérisé est un signal complexe comportant une voie I et une voie Q.

Un procédé selon l'invention mis en oeuvre par et dans un récepteur selon l'invention comprend une première étape de multiplication du signal numérisé sur chacune des voies I et Q par des signaux respectifs en phase et en quadrature générés à la fréquence *f_{pᵣₑₛ}* de la porteuse résiduelle par un générateur de porteuse.

Un récepteur selon un mode de réalisation de l'invention pour la mise en oeuvre de cette étape peut comprendre, tel que représenté sur la figure 4, un multiplicateur 7 adapté pour effectuer la multiplication du signal en bande de base de la voie I par un signal de la forme cos(2π.*f_{pᵣₑₛ}*.*t*), un multiplicateur 7' adapté pour effectuer la multiplication du signal en bande de base de la voie Q par ce même signal, un multiplicateur 8 adapté pour effectuer la multiplication du signal en bande de base de la voie I par un signal de la forme sin(2π.*f_{pᵣₑₛ}*.*t*) et un multiplicateur 8' adapté pour effectuer la multiplication du signal en bande de base de la voie Q par ce même signal.

Les signaux de la forme cos(2π.*f_{pᵣₑₛ}*.*t*) et sin(2π.*f_{pᵣₑₛ}.t)* sont de manière connue générés par un oscillateur à commande numérique.

Sur la voie I, un récepteur selon ce mode de réalisation comprend un sommateur 9 adapté pour effectuer la sommation des signaux à la sortie des multiplicateurs 7 et 8'. Sur la voie Q, un récepteur selon ce mode de réalisation comprend un sommateur 9' pour effectuer la sommation des signaux à la sortie des multiplicateurs 7' et 8.

Un procédé selon l'invention mis en oeuvre par et dans un récepteur selon l'invention comprend ensuite une étape de génération de *K* codes modifiés, où *K*=α.*fₛₚ*/*f_{c}*, α étant un entier prédéterminé. *K* traduit le découpage effectué par la sous-porteuse de fréquence *fₛₚ* sur une bribe du code pseudo-aléatoire de fréquence *f_{c}*.

Selon un mode de réalisation, tel que représenté sur les figures 2a à 2i, la fréquence de la sous-porteuse est égale à la fréquence du code pseudo-aléatoire. De plus, la sous-porteuse présente deux niveaux. Selon un mode de réalisation avantageux, l'entier α est fixé à 4, de telle sorte qu'un générateur de codes modifiés selon l'invention permet la génération de 4 codes pseudo-aléatoires modifiés. Chaque code présente sur une bribe de temps T*ₖ*, où T*ₖ*=1/4.*fₛₚ*, le signe du code pseudo-aléatoire sans sous-porteuse. En d'autres termes, chaque code a la forme d'un créneau de durée T*ₖ*. Les créneaux des différents codes pseudo-aléatoires modifiés sont décalés temporellement deux à deux successivement d'une valeur T*ₖ*.

Les figures 2f à 2i présente les quatre codes pseudo-aléatoires modifiés ainsi générés.

La génération des *K* codes modifiés est réalisée par un générateur 23 de codes modifiés. Ce générateur 23 est adapté pour émettre des créneaux de durée T*ₖ*, séparés deux à deux successivement d'une durée T*ₖ*.

- Sur chacune des voies I et Q, les signaux à la sortie des sommateurs 9 et 9' sont multipliés par ces *K* codes pseudo-aléatoires modifiés au moyen de multiplicateurs 10, 10' respectifs.

Sur chaque voie I et Q, les résultats de ces multiplications obtenus à différents instants sont sommés par des éléments de sommation 11, 11'.

Sur chaque voie I et Q, les *K* résultats obtenus à la sortie des éléments de sommation 11, 11' sont entrelacés temporellement par des dispositifs 12, 12' d'entrelacement de manière à fournir un signal unique en sortie de ces dispositifs d'entrelacement.

Dans une étape suivante, deux opérations sont menées en parallèle sur chaque voie, d'une part, la multiplication du vecteur composé des *K* éléments par un signal du type cos(2π.*fₛₚ*.*t* + ϕ) synchronisé sur un front montant du code pseudo-aléatoire généré par le récepteur, et d'autre part, la multiplication du vecteur composé des *K* éléments par un signal en quadrature de type sin(2π*.fₛₚ.t*+ϕ) synchronisé sur le front montant du code pseudo-aléatoire généré par le récepteur. Ces multiplications sont réalisées sur la voie I par des multiplicateurs 13, 14 et sur la voie Q par des multiplicateurs 13', 14'.

L'étape suivante consiste à sommer par des éléments de sommations 15, 16, 15', 16' les *K* éléments sur chaque voie.

Cette dernière étape permet ainsi la génération de signaux sur quatre voie I*_{I}*,I*_{Q}*,Q*_{I}*,Q*_{Q}*. Dans toute la suite, on notera par I*_{I}*, I*_{Q}*, Q*_{I}*, Q*_{Q}*, les signaux présents sur chacun des voies I*_{I}*, I*_{Q}*, Q*_{I}*, Q*_{Q}*.

Pendant la phase d'acquisition, un récepteur selon l'invention utilise ces quatre sorties pour estimer le retard et la fréquence Doppler ainsi que pour initialiser les boucles de code et de porteuse.

Un récepteur selon l'invention comprend un module 18 d'estimation de l'énergie. Ce module 18 d'estimation de l'énergie est adapté pour évaluer l'énergie E selon la relation E = ∑(*I_{I}*²+*I_{Q}*²+*Q_{I}*²+*Q_{Q}*²)*.*

L'estimation de l'énergie par le module 18 d'estimation permet de déterminer si la poursuite est effectuée sur le pic principal de la fonction d'autocorrélation ou sur un pic secondaire. En particulier, une diminution d'énergie est représentative d'une poursuite sur un pic secondaire. Dans un tel cas, un module 20 correcteur de phase et de retard est adapté pour effectuer une correction sur l'estimation du retard du code et une correction sur l'estimation de la phase de la porteuse.

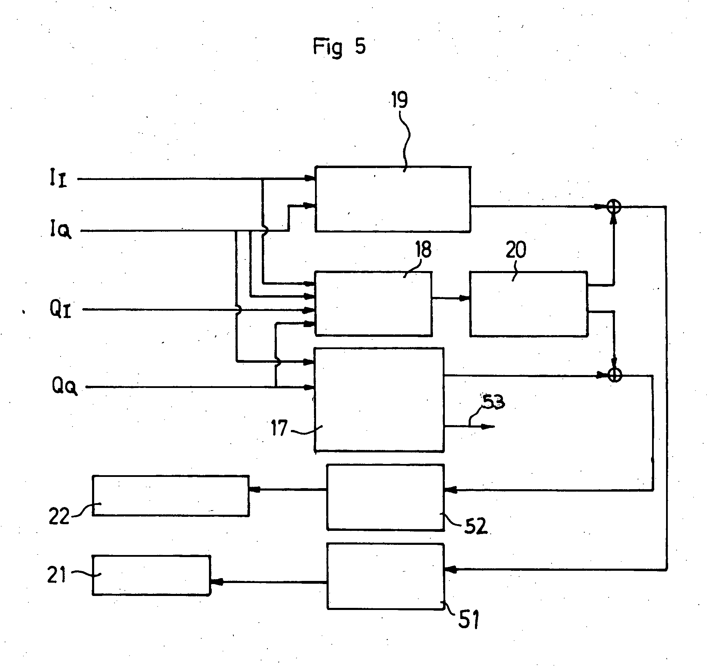

Ce module 20 correcteur est adapté pour fournir une phase de la porteuse et un retard de code schématiquement représentés sur les figures 4 et 5 respectivement par un bloc module 22 et un bloc module 21. Selon un mode de réalisation avantageux, cette phase de porteuse et ce retard de code peuvent être, de manière connue, respectivement filtrés par un filtre 52 de boucle sur la porteuse et un filtre 51 de boucle sur le code.

L'estimation de la phase de la porteuse est effectuée en utilisant une fonction du type arctangente. Un récepteur selon l'invention comprend un module 17 d'estimation de la phase de la porteuse. Ce module 17 d'estimation de la phase de la porteuse est adapté pour estimer la phase selon la relation δϕ=arctan(*Q_{Q}*/*I_{Q}*). Selon un autre mode de réalisation de l'invention, la phase de la porteuse peut être estimée par d'autres moyens équivalents.

En phase de poursuite, outre le module 17 d'estimation de la phase de la porteuse et le module 18 d'estimation de l'énergie, un module 19 d'estimation de la phase de la sous-porteuse est utilisé pour permettre la poursuite du code. Selon l'invention, la phase de la sous-porteuse est proportionnelle au retard du code. L'estimation de la sous-porteuse peut être réalisée à partir de l'une au moins des paires (I*_{I}*, I*_{Q}*), (Q*_{I}*, Q*_{Q}*). Sur la figure 5, le module 19 d'estimation de la phase de la sous-porteuse est réalisé uniquement à partir de la paire (I*_{I}*, I*_{Q}*).

Ce module 17 d'estimation de la phase de la porteuse permet également d'assurer la démodulation des données de navigation transmises par le signal BOC. Ces données démodulées sont schématiquement représentées par la référence 53 sur la figure 5.

Un récepteur selon l'invention peut comprendre de manière connue des circuits électroniques adaptés pour mettre en oeuvre les fonctions des différents modules décrits précédemment. En particulier, les fonctions décrites peuvent être réalisées par des circuits intégrés, par des circuits analogiques, par des moyens logiciels ou par une combinaison de moyens logiciels et de circuits électroniques.

Un procédé selon l'invention et un récepteur selon l'invention permettent la réception d'un signal BOC comprenant une sous-porteuse faible ou une sous-porteuse élevée.

Un procédé et un récepteur selon l'invention permettent la réception d'un signal composite de radionavigation comprenant un ou plusieurs signaux BOC.

Un procédé et un récepteur selon l'invention sont particulièrement adaptés et destinés à la réception de signaux transmis par les systèmes GALILEO et GPS.

Un procédé et un récepteur selon l'invention permettent la réception d'un signal radioélectrique, notamment un signal de radionavigation, qui nécessite moins de ressources énergétiques que les procédés et récepteurs de l'art antérieur.

## Revendications

1. Procédé de réception d'un signal composite radioélectrique de navigation comprenant au moins un signal, dit signal BOC, modulé par une porteuse de fréquence *fₚ*, une sous-porteuse carrée de fréquence *fₛₚ* et un code pseudo-aléatoire de fréquence *f_{c}*, inférieure à la fréquence *fₛₚ*, dans lequel,
- le signal radioélectrique de navigation est transposé sur une fréquence intermédiaire et numérisé,
- le signal numérisé est corrélé en phase et en quadrature par deux porteuses locales en phase et en quadrature générées par un oscillateur (40) local de porteuse contrôlé numériquement de manière à fournir un signal en bande de base comprenant une voie, dite voie I, et une voie, dite voie Q, en quadrature par rapport à ladite voie I,
**caractérisé en ce que** :
- des codes pseudos-aléatoires successifs, dits codes modifiés, en nombre *K*, où *K*=α.*fₛₚ*/*f_{c}*, α étant un entier prédéterminé multiple du nombre de niveaux de la sous-porteuse, sont générés localement par un générateur (23) numérique de codes modifiés, chaque code modifié présentant sur une bribe de temps T*ₖ*, où T*ₖ* =1/α.*fₛₚ*, la forme et le signe du code pseudo-aléatoire sans sous-porteuse, et a dès lors la forme d'un créneau de durée T*ₖ*, les créneaux des différents codes pseudo-aléatoires modifiés étant décalés temporellement deux à deux successivement de la valeur T*ₖ*,
- sur chaque voie, le signal en bande de base est multiplié par les *K* codes pseudos-aléatoires modifiés,
- sur chaque voie, les *K* signaux résultants sont intégrés sur une période de temps prédéterminée,
- sur chaque voie, les *K* résultats d'intégrations sont entrelacés temporellement de manière à fournir un signal unique,
- sur chaque voie, le signal ainsi généré est corrélé en phase et en quadrature par deux sous-porteuses en phase et en quadrature générées localement, pour fournir des signaux, dits signaux de sortie de voie,
- sur chaque voie, le signal de sortie de voie est intégré sur une période de temps prédéterminée.

2. Procédé selon la revendication 1, **caractérisé en ce que**, de manière à permettre une estimation du retard du code pseudo-aléatoire et une correction sur la phase de la porteuse :
- une estimation du retard basée sur un calcul d'énergie à partir des signaux (I*_{I}*,I*_{Q}*,Q*_{I}*,Q*_{Q}*) de sortie de voies est réalisée,
- une estimation de la phase de la porteuse est calculée à partir desdits signaux (I*_{I}*,I*_{Q}*,Q*_{I}*,Q*_{Q}*) de sortie de voie intégrés.

3. Procédé selon la revendication 2, **caractérisé en ce que**, en phase de poursuite,
- une estimation de la phase de la porteuse est calculée à partir des signaux (I*_{I}*,I*_{Q}*,Q*_{I}*,Q*_{Q}*) de sortie de voies,
- une estimation de la phase de la sous-porteuse est calculée à partir des signaux (I*_{I}*,I*_{Q}*,Q*_{I}*,Q*_{Q}*) de sortie de voies,
- une correction de la phase de la porteuse et du retard du code est effectuée si ladite énergie estimée diminue au cours du temps,
- une démodulation des données de navigation transmises par le signal BOC est réalisée.

4. Procédé selon l'une des revendications 2 ou 3, **caractérisé en ce que** ladite estimation d'énergie consiste à effectuer la somme quadratique de chacun des signaux (I*_{I}*,I*_{Q}*,Q*_{I}*,Q*_{Q}*) de sortie de voies.

5. Procédé selon l'une des revendications 2 à 4, **caractérisé en ce que** ladite estimation de la phase de la sous-porteuse est une estimation du type arctangente.

6. Procédé selon l'une des revendications 1 à 5, **caractérisé en ce que** ledit entier α est fixé à 4.

7. Récepteur d'un signal radioélectrique de navigation comprenant au moins un signal, dit signal BOC, modulé par une porteuse de fréquences *fₚ*, une sous-porteuse de fréquence *f*_{s*p*} et un code pseudo-aléatoire de fréquence *f_{c}*, comprenant :
- un circuit de corrélation de résidu de porteuse en phase et en quadrature entre ledit signal BOC et deux porteuses locales en phase et en quadrature générées par un oscillateur local (40) de porteuse de manière à fournir un signal en bande de base comprenant une voie, dite voie I, et une voie, dite voie Q, en quadrature par rapport à ladite voie I,
**caractérisé en ce qu'**il comprend :
- un générateur (23) numérique de *K* codes pseudo-aléatoires, dits codes modifiés, où *K*=α.*fₛₚ*/*f_{c},* α étant un entier prédéterminé multiple du nombre de niveaux de la sous-porteuse, chaque code modifié présentant sur une bribe de temps T*ₖ*, où T*ₖ*=1/α*.fₛₚ,* la forme et le signe du code pseudo-aléatoire sans sous-porteuse, et a dès lors la forme d'un créneau de durée T*ₖ*, les créneaux des différents codes pseudo-aléatoires modifiés étant décalés temporellement deux à deux successivement de la valeur T*ₖ*,
- un circuit de corrélation en phase et en quadrature entre le signal en bande de base et les *K* codes pseudos-aléatoires modifiés, comprenant des moyens d'intégration *des K* codes pseudos-aléatoires modifiés sur une période de temps prédéterminé, et des moyens d'entrelacement temporel des *K* résultats d'intégration de manière à fournir un signal unique,
- un circuit de corrélation en phase et en quadrature, sur chaque voie, entre les signaux résultants et deux sous-porteuses en phase et en quadrature générées localement, aptes à fournir des signaux, dits signaux de sortie de voie, et comprenant des moyens d'intégration, sur chaque voie, du signal de sortie de voie sur une période de temps prédéterminée.

8. Récepteur selon la revendication 7, **caractérisé en ce qu'**il comprend un estimateur (17) de phase de porteuse, un estimateur (19) de phase de sous-porteuse et un estimateur (18) d'énergie.

9. Récepteur selon la revendication 8, **caractérisé en ce que** l'estimateur (19) de phase de sous-porteuse est du type arctangente.

10. Récepteur selon l'une des revendications 8 ou 9, **caractérisé en ce que** ledit estimateur (18) d'énergie est adapté pour effectuer la somme quadratique des signaux (I*_{I}*,I*_{Q}*,Q*_{I}*,Q*_{Q}*) en sortie de voies.

11. Récepteur selon l'une des revendications 7 à 10, **caractérisé en ce que** ledit entier α est fixé à 4.

## Patentansprüche

1. Verfahren zum Empfangen eines radioelektrischen Verbundnavigationssignals, umfassend mindestens ein Signal, genannt BOC-Signal, das von einem Frequenzträger *fₚ*, einem quadratischen Unter-Frequenzträger *fₛₚ* und einem pseudozufälligen Frequenzcode *f_{c},* der niedriger als die Frequenz *fₛₚ* ist, moduliert ist, in dem
- das radioelektrische Navigationssignal auf eine zwischenliegende und digitalisierte Frequenz transponiert wird,
- das digitalisierte Signal in der Phase und der Quadratur von zwei lokalen Trägern in der Phase und der Quadratur korreliert, erzeugt von einem lokalen Oszillator (40) mit digital kontrolliertem Träger, um ein Basisband-Signal zu liefern, das eine Spur, genannt Spur I und eine Spur, genannte Spur Q, in Quadratur mit Bezug auf die Spur I umfasst,
**dadurch gekennzeichnet, dass**:
- pseudozufällige aufeinander folgende Codes, genannt modifizierte Codes, in der Anzahl *K*, wobei K = α.*fₛₚ*/*f_{c},* wobei α ein ganzzahliges vorbestimmtes Vielfaches der Anzahl von Niveaus des Unterträgers ist, lokal von einem digitalen Generator (23) von modifizierten Codes erzeugt werden, wobei jeder modifizierte Code auf einem Zeitabschnitt Tₖ, wobei Tₖ = 1/α.*fₛₚ* ist, die Form und das Zeichen des pseudozufälligen Codes ohne Unterträger darstellt, und infolgedessen die Form eines Schlitzes der Dauer T*k* aufweist, wobei die Schlitze der verschiedenen pseudozufälligen Codes zeitlich in aufeinander folgenden Zweierschritten des Werts T*k* versetzt sind,
- auf jeder Spur das Basisband-Signal mit *K* modifizierten pseudozufälligen Codes multipliziert wird,
- auf jeder Spur die sich ergebenden die *K* Signale in einem vorbestimmten Zeitraum integriert sind,
- auf jeder Spur die sich ergebenden K Ergebnisse von Integrationen zeitlich ineinander verschachtelt sind, um ein einziges Signal zu liefern,
- auf jeder Spur das so erzeugte Signal in der Phase und in der Quadratur mit zwei Unterträgern in der Phase und in der Quadratur korreliert, die lokal erzeugt werden, um Signale, genannt Spurausgang-Signale, zu liefern,
- auf jeder Spur das Spurausgangs-Signal in einem vorbestimmten Zeitraum integriert ist.

2. Verfahren nach Anspruch 1, **dadurch gekennzeichnet, dass**, um eine Schätzung der Verzögerung des pseudozufälligen Codes und eine Korrektur in der Phase des Trägers zur ermöglichen:
- eine Schätzung der Verzögerung, basierend auf einer Berechnung der Energie, ausgehend von den Spurausgangs-Signalen (I*_{I}*, I*_{Q}*, Q*_{I}*, Q*_{Q}*) durchgeführt wird,
- eine Schätzung der Phase des Trägers ausgehend von den integrierten Spurausgangs-Signalen (I*_{I}*, *I_{Q}*, *Q_{I}*, Q*_{Q}*) berechnet wird.

3. Verfahren nach Anspruch 2, **dadurch gekennzeichnet, dass** in der Verfolgungsphase
- eine Schätzung der Phase des Trägers ausgehend von den Spurausgangs-Signalen (I*_{I}*, I*_{Q}*, Q*_{I}*, Q*_{Q}*) berechnet wird,
- eine Schätzung der Phase des Unter-Trägers ausgehend von den Spurausgangs-Signalen (I*_{I}*, *I_{Q}, Q_{I}, Q_{Q})* berechnet wird,
- eine Korrektur der Phase des Trägers und der Verzögerung des Codes durchgeführt wird, wenn die geschätzte Energie im Laufe der Zeit abnimmt,
- eine Demodulation der Navigationsdaten, übertragen vom BOC-Signal, durchgeführt wird.

4. System nach einem der Ansprüche 2 oder 3, **dadurch gekennzeichnet, dass** die Schätzung der Energie darin besteht, die Quadratsumme jedes der Spurausgangs-Signale (I*_{I}*, I*_{Q}*, Q*_{I}*, Q*_{Q}*) durchzuführen.

5. Verfahren nach einem der Ansprüche 2 bis 4, **dadurch gekennzeichnet, dass** die Schätzung der Phase des Unterträgers eine Schätzung vom Typ Arkustangens ist.

6. Verfahren nach einem der Ansprüche 1 bis 5, **dadurch gekennzeichnet, dass** die Ganzzahl α auf 4 festgelegt ist.

7. Empfänger eines radioelektrischen Navigationssignals, umfassend mindestens ein Signal, genannt BOC-Signal, das von einem Frequenzträger *fₚ*, einem Frequenz-Unterträger *fₛₚ* und einem pseudozufälligen Code mit der Frequenz f_{c} moduliert wird, umfassend:
- eine Korrelationsschaltung eines Trägerrests in der Phase und in der Quadratur zwischen dem BOC-Signal und zwei lokalen Trägern in der Phase und der Quadratur, erzeugt von einem lokalen Oszillator (40) eines Trägers, um ein Basisbandsignal zu liefern, umfassend eine Spur, genannt Spur I und ein Spur, genannt Spur Q, in Quadratur mit Bezug auf die Spur I,
**dadurch gekennzeichnet, dass** er Folgendes umfasst:
- einen digitalen Generator (23) mit K pseudozufälligen Codes, genannt modifizierte Codes, wobei K = *α.fₛₚ*/*f_{c},* wobei α ein ganzzahliges vorbestimmtes Vielfaches der Anzahl von Niveaus des Unterträgers ist, wobei jeder modifizierte Code auf einem Zeitabschnitt T*ₖ*, wobei T*ₖ* = 1/α.*fₛₚ* ist, die Form und das Zeichen des pseudozufälligen Codes ohne Träger bildet und infolgedessen die Form eines Schlitzes der Dauer T*ₖ* aufweist, wobei die Schlitze der verschiedenen pseudozufälligen modifizierten Codes zeitlich in aufeinander folgenden Zweierschritten des Werts Tk versetzt sind,
- eine Korrelationsschaltung in der Phase und in der Quadratur zwischen dem Basisband-Signal und den *K* pseudozufälligen modifizierten Codes, umfassend Mittel zur Integration der *K* pseudozufälligen modifizierten Codes in einem vorbestimmten Zeitraum, und Mittel zur zeitlichen Verschachtelung der *K* Ergebnisse der Integration, um eine einziges Signal zu liefern.
- eine Korrelationsschaltung in der Phase und in der Quadratur auf jeder Spur, zwischen den sich ergebenden Signalen und zwei Unterträgern in der Phase und in der Quadratur, die lokal erzeugt sind, dazu in der Lage, Signale zu liefern, genannt Spurausgangs-Signale, und umfassend Mittel zur Integration, auf jeder Spur, des Spurausgangs-Signals in einem vorbestimmten Zeitraum.

8. Empfänger nach Anspruch 7, **dadurch gekennzeichnet, dass** er einen Schätzer (17) der Trägerphase umfasst, einen Schätzer (19) der Unterträger-Phase und einen Schätzer (18) der Energie.

9. Empfänger nach Anspruch 8, **dadurch gekennzeichnet, dass** der Schätzer (19) der Unterträger-Phase vom Type Arkustangens ist.

10. Empfänger nach einem der Ansprüche 8 oder 9, **dadurch gekennzeichnet, dass** der Schätzer (18) der Energie ausgelegt ist, um die Quadratsumme jedes der Spurausgangs-Signale (I*_{I}*, I*_{Q}*, Q*_{I}*, Q*_{Q}*) durchzuführen.

11. Empfänger nach einem der Ansprüche 7 bis 10, **dadurch gekennzeichnet, dass** die Ganzzahl α auf 4 festgelegt ist.

## Claims

1. Process for receiving a composite radioelectric navigation signal comprising at least one signal, called the BOC signal, modulated by a carrier of frequency *fₚ*, a square subcarrier of frequency *fₛₚ* and a pseudo-random code of frequency *f_{c}*, lower than frequency *fₛₚ*, in which,
- the radioelectric navigation signal is transposed to an intermediate frequency and digitised,
- the digitised signal is correlated in phase and in quadrature by two local carriers in phase and in quadrature generated by a numerically controlled local carrier oscillator (40) so as to provide a baseband signal comprising a channel, called channel I, and a channel, called channel Q, in quadrature in relation to said channel I,
**Characterised in that**:
- successive pseudo-random codes, called modified codes, *K* in number, where *K* = α*.fₛₚ*/*f_{c}*, α being a predetermined integer, the value of which is a multiple of the number of levels of the subcarrier, are generated locally by a digital generator (23) of modified codes, each modified code exhibiting over a time-span T*ₖ*, where T*ₖ* = 1/α.*fₛₚ*, the form and the sign of the pseudo-random code without subcarrier, and has the form of a slot of duration T*ₖ*, the slots of the various modified pseudo-random codes being temporally offset, successively two by two, by a duration *Tₖ,*
- on each channel the baseband signal is multiplied by the K modified pseudo-random codes,
- on each channel the *K* resulting signals are integrated over a predetermined period of time,
- on each channel the *K* results of integrations are temporally interlaced so as to provide a single signal,
- on each channel the signal thus generated is correlated in phase and in quadrature by two locally generated subcarriers in phase and in quadrature, in order to provide signals, called channel-output signals,
- on each channel the channel-output signal is integrated over a predetermined period of time.

2. A process according to Claim 1, **characterised in that**, so as to enable an estimation of the delay of the pseudo-random code and a correction of the phase of the carrier:
- an estimation of the delay based on a calculation of energy from channel-output signals (I*_{I}*, I*_{Q}*, Q*_{I}*, Q*_{Q}*) is carried out,
- an estimate of the phase of the carrier is calculated from said channel-output signals (I*_{I}*, *I_{Q}, Q_{I}, Q_{Q}),* integrated.

3. A process according to Claim 2, **characterised in that**, in tracking phase,
- an estimate of the phase of the carrier is calculated from the channel-output signals (I*_{I}*, *I_{Q}, Q_{I}, Q_{Q}),*
- an estimate of the phase of the subcarrier is calculated from the channel-output signals (I*_{I}*, I*_{Q}*, Q*_{I}*, Q*_{Q}*),
- a correction of the phase of the carrier and of the delay of the code is carried out if said estimated energy diminishes in the course of time,
- a demodulation of the navigation data transmitted by BOC signal is carried out.

4. A process according to one of Claims 2 or 3, **characterised in that** said estimation of energy consists in carrying out the quadratic sum of each of the channel-output signals (I*_{I}*, I*_{Q}*, Q*_{I}*, Q*_{Q}*).

5. A process according to one of Claims 2 to 4, **characterised in that** said estimation of the phase of the subcarrier is an estimation of the arctangent type.

6. A process according to one of Claims 1 to 5, **characterised in that** said integer α is fixed at 4.

7. A receiver for a radioelectric navigation signal comprising at least one signal, called the BOC signal, modulated by a carrier of frequency *fₚ*, a subcarrier of frequency *fₛₚ* and a pseudo-random code of frequency *f_{c}*, comprising:
- a circuit for correlation of residual carrier in phase and in quadrature between said BOC signal and two local carriers in phase and in quadrature generated by a local carrier oscillator (40) so as to provide a baseband signal comprising a channel, called channel I, and a channel, called channel Q, in quadrature in relation to said channel I,
**characterised in that** it comprises:
- a digital generator (23) of *K* pseudo-random codes, called modified codes, where *K* = α.*fₛₚ*/*f_{c}*, α being a predetermined integer, the value of which is a multiple of the number of levels of the subcarrier, each modified code exhibiting over a time-span T*ₖ*, where T*ₖ* = 1/α.*fₛₚ*, the form and the sign of the pseudo-random code without subcarrier, and has the form of a slot of duration *Tₖ*, the slots of the various modified pseudo-random codes being temporally offset, successively two by two, by a duration *Tₖ*,
- a circuit for correlation in phase and in quadrature between the baseband signal and the *K* modified pseudo-random codes, comprising means for integration of the *K* modified pseudo-random codes over a predetermined period of time, and means for temporally interlacing the *K* results of integrations so as to provide a single signal,
- a circuit for correlation in phase and in quadrature, on each channel, between the resulting signals and two locally generated subcarriers in phase and in quadrature, capable of providing signals, called channel-output signals, and comprising, on each channel, integration means of the channel-output signal on a predetermined period of time.

8. A receiver according to Claim 7, **characterised in that** it comprises a carrier-phase estimator (17), a subcarrier-phase estimator (19) and an energy estimator (18).

9. A receiver according to Claim 8, **characterised in that** the subcarrier-phase estimator (19) is of the arctangent type.

10. A receiver according to one of Claims 8 or 9, **characterised in that** said energy estimator (18) is suitable to carry out the quadratic sum of the channel-output signals (I*_{I}*, I*_{Q}*, Q*_{I}*, Q*_{Q}*).

11. A receiver according to one of Claims 7 to 10, **characterised in that** said integer α is fixed at 4.
